# EUROPÄISCHE PATENTSCHRIFT

(11) **EP 1 873 016 B1**
(45) Veröffentlichungstag und Bekanntmachung des Hinweises auf die Patenterteilung: **22.07.2009**
(21) Anmeldenummer: 07009486.7
(22) Anmeldetag: 11.05.2007
(51) Int. Cl.: B60R 13/00

(54) **Befestigungseinrichtung für ein Anbauteil**
Mounting device for an attachment part
Dispositif de fixation pour une pièce rapportée

(30) Priorität: 24.06.2006 DE 102006029173
(43) Veröffentlichungstag der Anmeldung: 02.01.2008
(73) Patentinhaber: Dr. Ing. h.c. F. Porsche Aktiengesellschaft, 70435 Stuttgart (DE)
(72) Erfinder: Keller, Markus, 71229 Leonberg (DE); Kruschhausen, Heinz-Arno, 75446 Wiernsheim (DE); Beer, Adrian, 71032 Böblingen (DE)

(56) Entgegenhaltungen:
- WO-A-01/10681
- DE-A1- 10 211 660
- US-A- 3 746 378

## Beschreibung

Die vorliegende Erfindung betrifft eine Befestigungseinrichtung für ein Anbauteil zur Befestigung an einem Karosserieteil, gemäß dem Oberbegriff des Anspruchs 1.

Im heutigen Fahrzeugbau ist es üblich, Anbauteile, wie beispielsweise ein Markenemblem, über eine Rast- bzw. Clipsverbindung mit einem zugehörigen Karosserieteil zu verbinden. Dabei werden die Anbauteile vorzugsweise in einem letzten Fertigungsschritt in der Endmontage des Kraftfahrzeuges am Fahrzeug bzw. am Karosserieteil befestigt. Die Befestigung sollte dabei so ausgebildet sein, dass ein späteres unfachmännisches Lösen des Anbauteiles, beispielsweise bei einem Diebstahl, zumindest erschwert wird.

Aus der gattungsbildenden WO 01/10681 A1 ist eine Befestigungseinrichtung für ein Anbauteil in Form eines Typenschildes zur Befestigung an einem Karosserieteil bekannt. Die Befestigungseinrichtung besteht dabei im wesentlichen aus einem Trägerelement, welches von einer Sichtseite am Karosserieteil angeordnet ist, eine sichtbare Typenbezeichnung trägt, und einem Haltelement, welches von einer Nichtsichtseite am Karosserieteil angeordnet ist und gleichzeitig ein Gegenrastelement für am Trägerelement ausgebildete Rastelemente bildet. Dabei weisen die Rastelemente des Trägerelementes mehrere Widerhaken auf, welche ein nahezu stufenloses Verrasten der Rastelemente im Gegenrastelement erlauben.

Weitere Befestigungseinrichtungen für Anbauteile an Karosseriebauteilen sind beispielsweise aus der DE 37 04 190 A1 und der G 8903289 U1 bekannt.

Die vorliegende Erfindung beschäftigt sich mit dem Problem, für eine Befestigungseinrichtung der gattungsgemäßen Art eine verbesserte oder zumindest eine andere Ausführungsform anzugeben, welche insbesondere eine Teilung des Montagevorgangs der Befestigungseinrichtung in mehrere Montageschritte erlaubt.

Dieses Problem wird erfindungsgemäß durch den Gegenstand des unabhängigen Anspruches gelöst. Vorteilhafte Ausführungsformen sind Gegenstand der abhängigen Ansprüche.

Die vorliegende Erfindung beruht auf dem allgemeinen Gedanken, bei einer ein Trägerelement und ein Halteelement aufweisenden Befestigungseinrichtung zur Befestigung eines Anbauteils an einem Karosserieteil, am Halteelement Hinterschnittelemente vorzusehen, über welche das Halteelement von einer rückwärtigen Nichtsichtseite durch entsprechende Öffnungen in einem Karosserieteil hindurchgreift und sich mit am Karosserieteil ausgebildeten Haltekonturen verhakt. Somit kann das Halteelement in einem ersten Montageschritt am Karosserieteil befestigt werden, während ein Trägerelement, welches beispielsweise ein Emblem oder ein Wappen trägt, in einem weiteren Montageschritt, beispielsweise in einem anderen Werk, mit dem Halteelement bzw. dem Karosserieteil verbunden werden kann. Durch die Hinterschnittelemente kann das Halteelement zuverlässig und selbstständig am Karosserieteil fixiert werden, so dass eine Montageunterbrechung problemlos möglich ist.

Zweckmäßig weist das Trägerelement zumindest eine erste Positionieröffnung auf, in welche zumindest eine zugehörige Positioniernase des Anbauteils eingreift. Die mit den Positionieröffnungen am Trägerelement zusammenwirkenden Positioniernasen des Anbauteils gewährleisten somit eine exakte Positionierung des Anbauteils bezüglich des Trägerteils, was insbesondere für das Design beeinflussende Spaltmaße von großem Vorteil ist. Gleichzeitig erleichtern die Positioniernasen das exakte Anbringen des Anbauteils am Trägerelement, so dass der Montagevorgang qualitativ besser und in kürzerer Zeit ausgeführt werden kann.

Bei einer vorteilhaften Ausführungsform der erfindungsgemäßen Lösung weist das Trägerelement Rastzungen auf, welche mit am Karosserieteil angeordneten Gegenrastkonturen zusammenwirken und das Trägerelement fest am Karosserieteil fixieren. Die Rastzungen bewirken dabei zusätzlich zu den Hinterschnittelementen eine Fixierung des Halteelementes am Karosserieteil, so dass diese lagefixiert in einem ersten Arbeitsschritt am Karosserieteil angeordnet werden kann. Die Rastzungen verhindern darüber hinaus, dass sich das Halteelement bezüglich seiner Lage gegenüber dem Karosserieteil verstellen kann, so dass das Karosserieteil problemlos zu einer weiteren Arbeitsstation bewegt werden kann, ohne das befürchtet werden muss, dass sich zwischenzeitlich das Halteelement bezüglich des Karosserieteils verschiebt.

Bei einer weiteren vorteilhaften Ausführungsform weist das Trägerelement sich gegenüberliegende und an jeweils einem Rastelement angeordnete Rastnasen auf, welche bei am Halteelement montiertem Trägerelement mit einander gegenüberliegenden Gegenrastelementen des Halteelementes verrastet sind. Eine derartige Anordnung von Rastelementen und Gegenrastelementen bedingt zum Lösen der Befestigungseinrichtung einen Zugang von der Nichtsichtseite her, also von der Seite auf der das Halteelement angeordnet ist. Ein unerlaubtes bzw. unerwünschtes Entfernen des Anbauteiles wird somit erheblich erschwert, sofern die Nichtsichtseite nur durch Demontage eines weiteren Teils, beispielsweise des Karosserieteils, zugänglich wird. Die Verrastung bietet somit einen erhöhten Diebstahlschutz für das Anbauteil.

Zweckmäßig sind das Trägerelement und/oder das Halteelement jeweils als einteiliges Kunststoffbauteil ausgebildet. Dabei kann vorgesehen sein, dass das Trägerelement und/oder das Halteelement im Spritzgussverfahren hergestellt werden, wodurch qualitativ hochwertige und gleichzeitig kostengünstige Bauelemente hergestellt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Befestigungseinrichtung für ein Anbauteil zur Befestigung an einem Karosserieteil,
- Fig. 2: einen Querschnitt durch die Befestigungseinrichtung in der Ebene |-|,
- Fig. 3: eine Ansicht auf ein Halteelement von einer dem Karosserieteil abgewandten Seite aus.

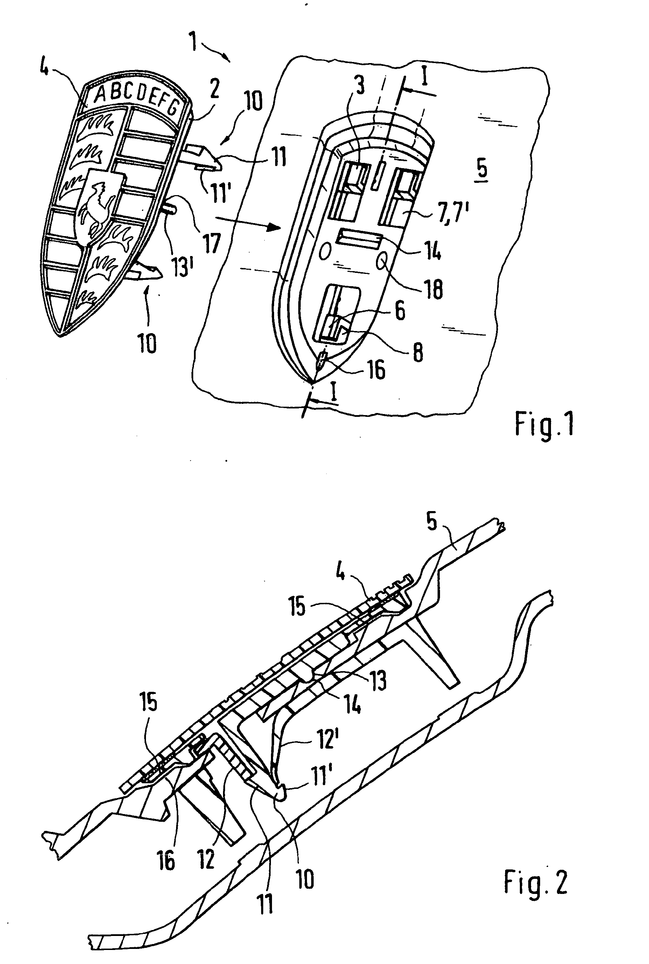

Entsprechend Fig. 1 weist eine erfindungsgemäße Befestigungseinrichtung 1 ein Trägerelement 2 sowie ein Haltelement 3 auf. Die Befestigungseinrichtung 1 dient dabei zur Befestigung eines Anbauteiles 4, beispielsweise eines Wappens oder eines Emblems, an einem Karosserieteil 5. Das Trägerelement 2 ist von einer Sichtseite am Karosserieteil 5 angeordnet, während das Haltelement 3 von einer Nichtsichtseite am Karosserieteil 5 angeordnet ist. Um einen Montagevorgang der Befestigungseinrichtung 1 in mehrere Arbeitsschritte gliedern zu können, sind am Halteelement 3 Hinterschnittelemente 6 vorgesehen, über welche das Halteelement 3 von der Nichtsichtseite durch entsprechende Öffnungen 7 im Karosserieteil 5 hindurchgreift und karosserieteilseitige Haltekonturen 8 hintergreift. Eine Größe der Hinterschnittelemente 6 ist dabei derart auf die Größe der Öffnungen 7 im Karosserieteil 5 abgestimmt, dass das Halteelement 3 zunächst in Normalenrichtung des Karosserieteils 5 durch die Öffnungen 7 hindurchgesteckt werden kann und dann im wesentlichen parallel zur Ebene des Karosserieteils 5 derart verstellt wird, dass die Hinterschnittelemente 6 die karosserieseitigen Haltekonturen 8 um- bzw. hintergreifen und dadurch fest mit dem Karosserieteil 5 verbunden sind.

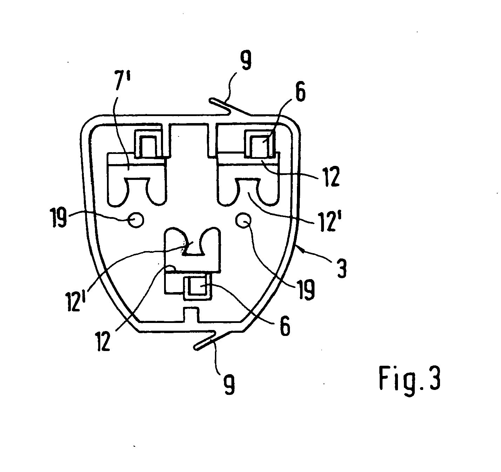

Zusätzlich können am Haltelement 3 Rastzungen 9 (vgl. Fig. 3) ausgebildet sein, welche mit am Karosserieteil 5 angeordneten und nicht gezeigten Gegenrastkonturen zusammenwirken beziehungsweise verrasten und dadurch das Haltelement 3 fest beziehungsweise verliersicher am Karosserieteil 5 fixieren. Das Haltelement 3 kann somit zuverlässig mit dem Karosserieteil 5 verrastet werden, so dass alle von einer Nichtsichtseite des Karosserieteils 5 her erforderlichen Arbeiten abgeschlossen werden können und das weitere Montieren der Befestigungseinrichtung 1, das heißt das Einclipsen des Trägerelementes 2, ausschließlich von der Sichtseite her erfolgen kann.

Gemäß der Fig. 1 weist das Trägerelement 2 sich gegenüberliegende und jeweils an einem Rastelement 10 angeordnete Rastnasen 11 und 11' auf. Bei komplett montierter Befestigungseinrichtung 1 sind die Rastnasen 11 und 11' des Rastelementes 10 mit einander gegenüberliegenden Gegenrastelementen 12 und 12' des Halteelementes 3 verrastet (vgl. Fig. 2 und 3). Erfindungsgemäß sind die Gegenrastelemente 12 und 12' des Halteelementes 3 auf einer dem Trägerelement 2 abgewandten Seite des Halteelementes 3 angeordnet, so dass diese nur von einer Nichtsichtseite aus zugänglich sind. Dabei ist gemäß der Fig. 3 das Gegenrastelement 12 als Rastkante bzw. Rastkontur ausgebildet, während das Gegenrastelement 12' des Haltelementes 3 als federelastische Zunge ausgebildet ist. Die sich gegenüberliegende Verrastung bewirkt, dass zum Lösen der Befestigungseinrichtung 1 ein Zugang zur Nichtsichtseite gegeben sein muss, da ansonsten auch bei einem Verbiegen der Rastelemente 10 jeweils eine Rastnase 11 oder 11' mit dem zugehörigen Gegenrastelement 12 oder 12' verrastet bleibt. Die sich gegenüberliegende Verrastung bietet somit einen erhöhten Diebstahlschutz.

Um miteinander Verrasten zu können, müssen die Rastelemente 10 des Trägerelementes 2 durch entsprechende Öffnungen 7 im Karosserieteil 5 und entsprechende Öffnungen 7' im Halteelemente 3 hindurchgreifen.

Um die Positionierung des Trägerelementes 2 am Karosserieteil 5 bzw. gegenüber dem Halteelement 3 zu vereinfachen, weist das Trägerelement 2 zumindest eine dem Karosserieteil 5 zugewandte Positioniernase 13 auf (vgl. Fig. 2), welche bei montiertem Anbauteil 4 in eine komplementär dazu ausgebildete Positioniervertiefung 14 am Karosserieteil 5 eingreift (vgl. Fig. 1).

Darüber hinaus ist denkbar, dass das Trägerelement 2 zumindest eine dem Karosserieteil 5 zugewandte Positionierkerbe 15 aufweist, welche mit einer am Karosserieteil 5 angeordneten Positioniererhebung 16 zusammenwirkt. Dabei kann des weiteren vorgesehen sein, dass die Positioniernase 13 zur Positionierung des Trägerelementes 2 in X-Richtung gegenüber dem Karosserieteil 5 vorgesehen ist, während die Positionierkerbe 15 am Trägerelement 2 zur Positionierung in Y-Richtung gegenüber dem Karosserieteil 5 dient.

Um das Anbauteil 4 leicht und positionsexakt am Trägerelement 2 positionieren bzw. fixieren zu können, weist das Trägerelement 2 zumindest eine erste Positionieröffnung 17 auf (vgl. Fig. 1) in welche zumindest eine zugehörige Positioniernase 13' des Anbauteils 4 eingreift. Dem gegenüber weist das Karosserieteil 5 eine zweite Positionieröffnung 18 auf (vgl. Fig. 1), welche fluchtend zu der mindestens eine erste Positionieröffnung 17 des Trägerelementes 2 angeordnet ist. Eine dritte Positionieröffnung 19 ist am Halteelement 3 vorgesehen, ebenfalls fluchtend zu der mindestens einen ersten Positionieröffnung 17 des Trägerelementes 2 angeordnet. Dabei kann die Positioniernase 13' des Anbauteiles 4 entweder durch die erste Positionieröffnung 17 am Trägerelement 2 und die zweite Positionieröffnung 18 am Karosserieteil 5 eingreifen oder aber in alle drei Positionieröffnungen 17, 18 und 19.

Um die Befestigungseinrichtung 1 möglichst kostengünstig und mit geringen Stückkosten herstellen zu können, sind das Trägerelement 2 und/oder das Halteelement 3 jeweils als einteiliges Kunststoffbauteil ausgebildet und beispielsweise im Spritzgussverfahren hergestellt.

Im folgenden sollen kurz die charakteristischen Merkmalen der erfindungsgemäßen Befestigungseinrichtung 1 erläutert werden:

Das Halteelement 3 der Befestigungseinrichtung 1 wird von einer Nichtsichtseite her mit seinen Hinterschnittelementen 6 durch die Öffnung 7 im Karosserieteil 5 gesteckt und dann im wesentlichen parallel zur Ebene des Karosserieteils verlaufender Richtung verschoben, bis die Hinterschnittelemente 6 die karosserieseitigen Haltekonturen 8 hintergreifen. Ist das Haltelement 3 vollständig in seine Endlage verschoben, so verrasten am Halteelement 3 angeordnete Rastzungen 9 mit entsprechenden am Karosserieteil 5 angeordneten und nicht gezeigten Gegenrastkonturen, so dass das Halteelement 3 fest am Karosserieteil 5 fixiert ist. Nun kann das Karosserieteil 5 beispielsweise mit dem Kraftfahrzeug verbunden werden zwar auch derart, dass eine Nichtsichtseite des Karosserieteiles 5 nicht mehr zugänglich ist. Das Trägerelement 2 mit dem darauf angeordneten Anbauteil 4, beispielsweise einem Markenemblem, kann nun durch einfaches Andrücken von der Sichtseite aus mit dem Halteelement 3 verrastet werden und dadurch fest am Karosserieteil 5 fixiert werden. Durch die spezielle Ausbildung der Rastelemente 10 mit zwei sich gegenüberliegenden Rastnasen 11 und 11' kann eine mit entsprechend gegenüberliegenden Gegenrastelementen 12 und 12' erreicht werden, so dass ein Lösen des Anbauteiles 4 allein von der Sichtseite aus nicht mehr möglich ist, wodurch ein Diebstahl des Anbauteils 4, ohne eine Zerstörung der Befestigungseinrichtung 1 ausgeschlossen werden kann. Durch die selbstständige Befestigung des Halteelementes 3 am Karosserieteil 5 kann das endgültige Anbringen des Trägerelementes 2 an dem Karosserieteil 5 auch zu einem späteren Zeitpunkt, das heißt in einem späteren Arbeitsschritt, ausgeführt werden.

## Patentansprüche

1. Befestigungseinrichtung (1) für ein Anbauteil (4) zur Befestigung an einem Karosserieteil (5),
- wobei die Befestigungseinrichtung (1) ein Trägerelement (2) und ein Halteelement (3) aufweist,
- wobei im montierten Zustand das Trägerelement (2) von einer Sichtseite und das Haltelement (3) von einer Nichtsichtseite am Karosserieteil (5) angeordnet ist, **dadurch gekennzeichnet, dass** das Halteelement (3) Hinterschnittelemente (6) aufweist, über welche es im montierten Zustand von der Nichtsichtseite durch entsprechende Öffnungen (7) im Karosserieteil (5) hindurchgreift und karosserieteilseitige Haltekonturen (8) hintergreift.

2. Befestigungseinrichtung nach Anspruch 1, **dadurch gekennzeichnet, dass** das Trägerelement (2) sich gegenüberliegende und an jeweils einem Rastelement (10) angeordnete Rastnasen (11, 11') aufweist, dass die Rastnasen (11, 11') des Rastelements (10) im montierten Zustand mit einander gegenüberliegenden Gegenrastelementen (12, 12') des Halteelements (3) verastet sind, dass die Rastelemente (10) des Trägerelements (2) im montierten Zustand durch entsprechende Öffnungen (7') im Karosserieteil (5) und im Halteelement (3) hindurchgreifen, dass die Gegenrastelemente (12, 12') des Halteelements (3) auf einer dem Trägerelement (2) abgewandten Seite des Halteelements (3) angeordnet sind.

3. Befestigungseinrichtung nach Anspruch 1 oder 2, **dadurch gekennzeichnet, dass** das Trägerelement (2) zumindest eine dem Karosserieteil (5) zugewandte Positioniernase (13) aufweist, welche im montierten Zustand in eine komplementär dazu am Karosserieteil (5) ausgebildete Positioniervertiefung (14) eingreift, und/oder dass das Trägerelement (2) zumindest eine dem Karosserieteil (5) zugewandte Positionierkerbe (15) aufweist, welche im montierten Zustand mit einer am Karosserieteil (5) angeordneten Positioniererhebung (16) zusammenwirkt.

4. Befestigungseinrichtung nach einem der vorhergehenden Ansprüche, **dadurch gekennzeichnet, dass** das Trägerelement (2) zumindest eine erste Positionieröffnung (17) aufweist, in welche im montierten Zustand zumindest eine zugehörige Positioniernase (13') des Anbauteils (4) eingreift.

5. Befestigungseinrichtung nach Anspruch 4, **dadurch gekennzeichnet, dass** am Karosserieteil (5) eine zweite Positionieröffnung (18) vorgesehen ist, welche fluchtend im montierten Zustand zu der mindestens einen ersten Positionieröffnung (17) des Trägerelements (2) angeordnet ist.

6. Befestigungseinrichtung nach Anspruch 4 oder 5, **dadurch gekennzeichnet, dass** am Haltelement (3) eine dritte Positionieröffnung (19) vorgesehen ist, welche im montierten Zustand fluchtend zu der mindestens einen ersten Positionieröffnung (17) des Trägerelements (2) angeordnet ist.

7. Befestigungseinrichtung nach Anspruch 6, **dadurch gekennzeichnet, dass** die Positioniernase (13') des Anbauteils (4) im montierten Zustand in die zweite Positionieröffnung (18) eingreift, oder dass die Positioniernase (13') des Anbauteils (4) im montierten Zustand in die zweite und die dritte Positionieröffnung (18, 19) eingreift.

8. Befestigungseinrichtung nach einem der Ansprüche 1 bis 7, **dadurch gekennzeichnet, dass** das Trägerelement (2) und/oder das Halteelement (3) jeweils als einteiliges Kunststoffbauteil ausgebildet sind.

9. Befestigungseinrichtung nach einem der Ansprüche 1 bis 8, **dadurch gekennzeichnet, dass** zumindest eines der Gegenrastelemente (12') des Haltelements (3) als federelastische Zunge ausgebildet ist.

10. Befestigungseinrichtung nach einem der Ansprüche 1 bis 9, **dadurch gekennzeichnet, dass** das Anbauteil (4) ein Emblem aufweist.

11. Befestigungseinrichtung nach einem der Ansprüche 1 bis 10, **dadurch gekennzeichnet, dass** das Halteelement (3) Rastzungen (9) aufweist, welche im montierten Zustand mit am Karosserieteil (5) angeordneten Gegenrastkonturen zusammenwirken und das Halteelement (3) fest am Karosserieteil (5) fixieren.

## Claims

1. Fastening device (1) for an attachment part (4) for fastening to a body part (5),
- wherein the fastening device (1) comprises a carrier element (2) and a retaining element (3),
- wherein, in the mounted state, the carrier element (2) is arranged on the body part (5) from a visible side and the retaining element (3) is arranged on the body part (5) from a non-visible side,
**characterized in that** the retaining element (3) comprises undercut elements (6) via which it engages, in the mounted state, from the non-visible side through corresponding openings (7) in the body part (5) and engages behind retaining contours (8) on the body part side.

2. Fastening device according to Claim 1, **characterized in that** the carrier element (2) comprises mutually opposite latching lugs (11, 11') arranged on a respective latching element (10), **in that**, in the mounted state, the latching lugs (11, 11') of the latching element (10) are latched with mutually opposite mating latching elements (12, 12') of the retaining element (3), **in that**, in the mounted state, the latching elements (10) of the carrier element (2) engage through corresponding openings (7') in the body part (5) and in the retaining element (3), and **in that** the mating latching elements (12, 12') of the retaining element (3) are arranged on a side of the retaining element (3) that faces away from the carrier element (2).

3. Fastening device according to Claim 1 or 2, **characterized in that** the carrier element (2) comprises at least one positioning lug (13) which faces the body part (5) and which, in the mounted state, engages in a positioning depression (14) formed in a complementary manner thereto on the body part (5), and/or **in that** the carrier element (2) comprises at least one positioning notch (15) which faces the body part (5) and which, in the mounted state, interacts with a positioning elevation (16) arranged on the body part (5).

4. Fastening device according to one of the preceding claims, **characterized in that** the carrier element (2) comprises at least one first positioning opening (17) in which, in the mounted state, at least one associated positioning lug (13') of the attachment part (4) engages.

5. Fastening device according to Claim 4, **characterized in that** a second positioning opening (18) is provided on the body part (5) and, in the mounted state, is arranged in alignment with the at least one first positioning opening (17) of the carrier element (2).

6. Fastening device according to Claim 4 or 5, **characterized in that** a third positioning opening (19) is provided on the retaining element (3) and, in the mounted state, is arranged in alignment with the at least one first positioning opening (17) of the carrier element (2).

7. Fastening device according to Claim 6, **characterized in that,** in the mounted state, the positioning lug (13') of the attachment part (4) engages in the second positioning opening (18), or **in that**, in the mounted state, the positioning lug (13') of the attachment part (4) engages in the second and the third positioning openings (18, 19).

8. Fastening device according to one of Claims 1 to 7, **characterized in that** the carrier element (2) and/or the retaining element (3) are in each case formed as a one-part plastic component.

9. Fastening device according to one of Claims 1 to 8, **characterized in that** at least one of the mating latching elements (12') of the retaining element (3) is designed as a resilient tongue.

10. Fastening device according to one of Claims 1 to 9, **characterized in that** the attachment part (4) comprises an emblem.

11. Fastening device according to one of Claims 1 to 10, **characterized in that** the retaining element (3) comprises latching tongues (9) which, in the mounted state, interact with mating latching contours arranged on the body part (5) and fix the retaining element (3) securely on the body part (5).

## Revendications

1. Dispositif de fixation (1) pour une pièce rapportée (4) à fixer à une partie de carrosserie (5) ;
- le dispositif de fixation (1) comportant un élément de support (2) et un élément de retenue (3) ;
- l'élément de support (2) étant disposé contre la partie de carrosserie (5) depuis un côté visible à l'état monté et l'élément de retenue (3) étant disposé depuis un côté non visible, **caractérisé en ce que** l'élément de retenue (3) comporte des éléments de contre-dépouille (6) à travers lesquels il s'emboîte à l'état monté depuis le côté non visible en traversant les ouvertures (7) correspondantes réalisées dans la partie de carrosserie (5) et qu'il emboîte les contours de retenue (8) situés du côté de la partie de carrosserie.

2. Dispositif de fixation selon la revendication 1, **caractérisé en ce que** l'élément de support (2) comporte des mentonnets d'arrêt (11, 11') opposés et disposés respectivement au niveau d'un élément d'arrêt (10), que les mentonnets d'arrêt (11, 11') de l'élément d'arrêt (10) sont encliquetés à l'état monté avec des contre-éléments d'arrêt (12, 12') opposés de l'élément de retenue (3), que les éléments d'arrêt (10) de l'élément de support (2) s'emboîtent à l'état monté dans la partie de carrosserie (5) et dans l'élément de retenue (3) à travers les ouvertures (7') correspondantes, que les contre-éléments d'arrêt (12, 12') de l'élément de retenue (3) sont disposés sur le côté de l'élément de retenue (3) opposé à l'élément de support (2).

3. Dispositif de fixation selon la revendication 1 ou 2, **caractérisé en ce que** l'élément de support (2) comporte au moins un mentonnet de positionnement (13) orienté vers la partie de carrosserie (5) qui s'encliquète à l'état monté dans un renfoncement de positionnement (14) complémentaire au niveau de la partie de carrosserie (5), et/ou que l'élément de support (2) comporte au moins une encoche de positionnement (15) orientée vers la partie de carrosserie (5) qui interagit à l'état monté avec une bosse de positionnement (16) disposée au niveau de la partie de carrosserie (5).

4. Dispositif de fixation selon l'une quelconque des revendications précédentes, **caractérisé en ce que** l'élément de support (2) comporte au moins une première ouverture de positionnement (17) dans laquelle s'encliquète au moins un mentonnet de positionnement (13') associé de la pièce rapportée (4) à l'état monté.

5. Dispositif de fixation selon la revendication 4, **caractérisé en ce qu'**une deuxième ouverture de positionnement (18) est prévue au niveau de la partie de carrosserie (5), ladite ouverture étant alignée à l'état monté sur l'au moins une première ouverture de positionnement (17) de l'élément de support (2).

6. Dispositif de fixation selon la revendication 4 ou 5, **caractérisé en ce qu'**une troisième ouverture de positionnement (19) est prévue au niveau de l'élément de retenue (3), ladite ouverture étant alignée à l'état monté sur l'au moins une première ouverture de positionnement (17) de l'élément de support (2).

7. Dispositif de fixation selon la revendication 6, **caractérisé en ce que** le mentonnet de positionnement (13') de la pièce rapportée (4) s'encliquète à l'état monté dans la deuxième ouverture de positionnement (18) ou que le mentonnet de positionnement (13') de la pièce rapportée (4) s'encliquète à l'état monté dans les deuxième et troisième ouvertures de positionnement (18, 19).

8. Dispositif de fixation selon l'une quelconque des revendications 1 à 7, **caractérisé en ce que** l'élément de support (2) et/ou l'élément de retenue (3) prennent respectivement la forme d'un élément en matière synthétique réalisé d'un seul tenant.

9. Dispositif de fixation selon l'une quelconque des revendications 1 à 8, **caractérisé en ce qu'**au moins un des contre-éléments d'arrêt (12') de l'élément d'arrêt (3) prend la forme d'une languette montée sur ressort.

10. Dispositif de fixation selon l'une quelconque des revendications 1 à 9, **caractérisé en ce que** la pièce rapportée (4) comporte un emblème.

11. Dispositif de fixation selon l'une quelconque des revendications 1 à 10, **caractérisé en ce que** l'élément de retenue (3) comporte des languettes d'arrêt (9) interagissant à l'état monté avec les contours d'arrêt complémentaires disposés au niveau de la partie de carrosserie (5) et fixant l'élément de retenue (3) fixement à la partie de carrosserie (5).
